# EUROPÄISCHE PATENTANMELDUNG

(11) **EP 0 884 820 A2**
(43) Veröffentlichungstag der Anmeldung: **16.12.1998**
(21) Anmeldenummer: 98110323.7
(22) Anmeldetag: 05.06.1998
(51) Int. Cl.: H02J 7/24

(54) **Wechselstrom-Ladegenerator**

(30) Priorität: 10.06.1997 AR 10250497
(71) Anmelder: Durelli, Olindo Luca Julio, Monte Buey, Cordoba (AR)
(72) Erfinder: Durelli, Olindo Luca Julio, Monte Buey, Cordoba (AR)
(74) Vertreter: Frohwitter, Bernhard, Dipl.-Ing.

(57) **Zusammenfassung**

Die Erfindung betrifft einen Wechselstrom-Ladungsgenerator mit Ständer, Läufer und mindestens einer Wicklungsanordnung, insbesondere in Dreiphasen-, Einphasen-, Dreieck- oder Sternstruktur.

Erfindungsgemäß ist vorgesehen, daß der Wicklungsanordnung eine wicklungsanordnungsindividuelle Gleichrichteranordnung zugeordnet ist. Die mindestens eine Wicklungsanordnung ist in einer Nut des Ständers angeordnet.

## Beschreibung

Die Einrichtung betrifft einen Wechselstrom-Ladungsgenerator nach dem Oberbegriff des Anspruchs 1.

In Vorrichtungen mit z.B. zwei Batterien (12V+12V), beispielsweise in Vorrichtungen wie Traktoren, Bussen, Straßenmaschinen, Flugzeugen, usw., in denen Mittelwellen/UKW-Empfänger, Telefone, BLU- bzw. BHF-Systeme, Ventilatoren, Kassettenspielgeräte, und weitere derartiger (12V-) Systeme installiert sind, können diese Systeme an die erste Batterie, d.h. an 0-12V angeschlossen werden. Dagegen kann an die zweite Batterie (12-24V) nichts angeschlossen werden, wegen des Problems, daß eine Spannung von 12 V an Masse liegen wurde, die 0-12V-Batterie Strom verbraucht, um alle angeschlossenen Systeme zu speisen. Damit sinkt die Spannung auf unter 12 V bis zur Entladung, während die 12-24V-Batterie vollständig geladen bleibt. Es besteht Gefahr, daß angeschlossene Systeme verbrennen.

In einem herkömmlichem System ist ein Startvorgang schwierig bzw. nicht durchführbar, aufgrund der Tatsache, daß einerseits die 12-24V-Batterie voll aufgeladen bleibt, während andererseits die 0-12V-Batterie entladen wird. Dabei geschieht folgendes: Die 0-12V-Batterie bleibt auf 12V und die 12-24V-Batterie behält die volle Ladung, wobei in der letztgenannten Batterie die Spannung auf 15 oder 16V steigt, so daß sich insgesamt 27 oder 28 V ergeben, der Regler schließt und die 0-12V-Batterie wird nicht aufgeladen. Zusammenfassend ist festzustellen, daß die 0-12-Batterie mangels 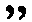 Sulfatierung 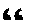 zerstört wird, wahrend die 12-24V-Batterie durch Überspannung, Aufbrauch des Wassers wegen exzessiver Spannung und auch durch Erwärmung zerstört wird. Dieses Problem tritt in einem herkömmlichen System auf, in dem mehrere Verbraucher (Starter, Ladegenerator, Lampen, etc.) aktiv geschaltet werden bzw. geschaltet werden sollen.

Es sind auch andere Vorrichtungen ( 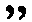 Serie-Parallel 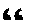 ) bekannt, die häufig nicht betriebsbereit sind, so daß Batterien und Startfunktion nicht zur Verfügung stehen und damit ein ernstes Problem besteht.

Ausgehend von diesem Stand der Technik liegt der Erfindung die Aufgabe zugrunde, einen Wechselstrom-Ladungsgenerator der eingangs genannten Art zu schaffen, der erweiterte Nutzungsmöglichkeiten bietet.

Der erfindungsgemäße Wechselstrom-Ladungsgenerator ist mit einer Mehrzahl von Vorteilen verbunden, die sich aus der weiteren Beschreibung ergeben.

Die Erfindung wird nun anhand der Zeichnungen beschrieben.

Es zeigt
- Figur 1: einen Schaltplan eines Ausführungsbeispiels des erfindungsgemäßen Wechselstrom-Ladungsgenerators; und
- Figur 2: eine konstruktive Ausgestaltung eines Ausführungsbeispiels des erfindungsgemäßen Wechselstrom-Ladungsgenerators.

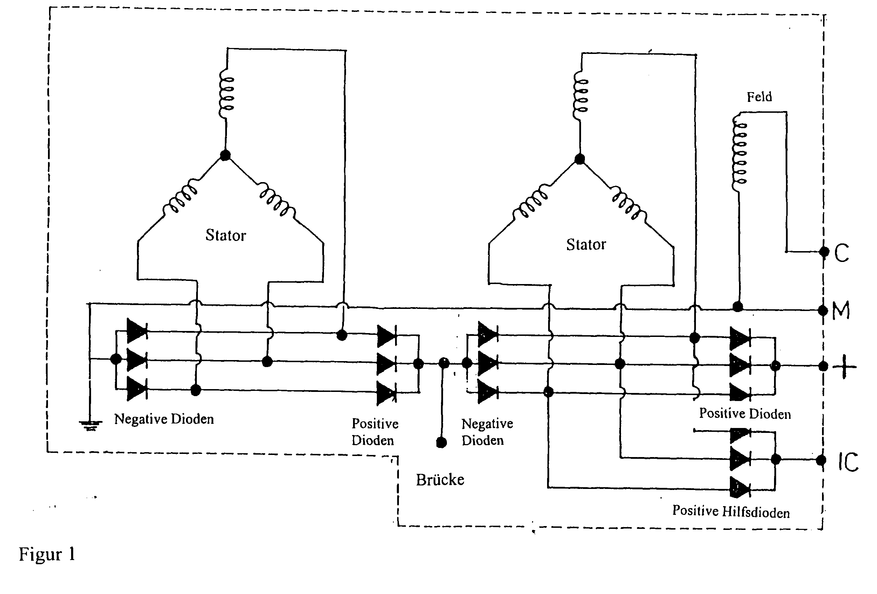

Der schaltungstechnische Aufbau einer bevorzugten Ausführungsform des erfindungsgemäßen Wechselstrom-Ladungsgenerators ist in Figur 1 dargestellt. Der erfindungsgemäße Wechselstrom-Ladungsgenerator weist Wicklungen z.B. in Stern-, Dreiecks- oder Einphasenstruktur auf. Die Wicklungen sind parallel angeordnet; die Anzahl der parallelen Wicklungen ist gleich der Anzahl der gleichzeitig maximal aufladbaren Batterien: Beispielsweise können Ladungsgeneratoren für 2, 3 oder 4 Batterien vorgesehen sein.

Jeder Wicklung kann eine individuelle Gleichrichteranordnung zugeordnet sein, die beispielsweise jeweils aus 3 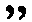 positiven 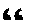 und 3 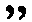 negativen 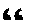 Gleichrichtern besteht, wie in Figur 1 dargestellt. Die Gleichrichter sind insbesondere Dioden. Ein Ladungsgenerator mit 2 Wicklungen weist 2 Brückengleichrichter bzw. Gleichrichteranordnungen auf, ein Ladungsgenerator mit 3 Wicklungen weist 3 Brückengleichrichter auf und ein Ladungsgenerator mit 4 Wicklungen weist 4 Brückengleichrichter auf. Beispielsweise lassen sich Ladungsgeneratoren bilden, die 12Volt/12Volt, 24Volt/24Volt, 7Volt/7Volt 4Volt/12Volt/6Volt bilden.

In einem System für 12+12+6+24 Volt haben die Parallelwicklungen z.B. 6 Drahtwindungen (12 Volt), 6 Windungen (12 Volt), 3 Windungen (6 Volt), und 12 Windungen (24Volt), jeweils mit individuellen Gleichrichtern und in Serie verbunden (12+-12+6+-24 Volt = 54Volt).

In diesem System steigen im Moment der Aufladung die Spannungen auf die folgenden Werte 14+14+7+28 Volt, und zwar alle gleichförmig. Batterien sind in Serie zueinander und parallel zu den Brückengleichrichtern angeordnet. Die Batterien können unterschiedliche Stromstärke aufweisen; die Batterie geringster Stromstärke erhält die entsprechende Aufladung bis zu ihrer Volladung, sei es eine Batterie mit 12 Volt und 35 Ampere bis mehr als 220 Ampere, wobei in diesem Fall der Aufladevorgang etwas länger dauert. Die Werte der Voltzahl sind genau 6-7V für 6/7V-Batterien, 12/14V für 12/14V-Batterien entsprechend der Rotorwicklung hinsichtlich der Voltzahl. Die Stromstärke ist entsprechend dem Bedarf beim Starten oder dem sonstigen Bedarf ausgelegt. An jedem Schaltungspunkt einer (positiven/negativen) Verbindung der Gleichrichterschaltungsplatinen (im Sinne der Figur 1) ist eine Brücke mit den entsprechenden Brücken bzw. Polen der Batterien verbunden, und zwar entsprechend der Statorausgestaltung. Es können 2 Wicklungen parallel angeordnet sein, wobei 2 Gleichrichterschaltungsplatinen in Serie und 2 Batterien in Serie angeordnet sind, wobei aber Gleichrichterbrücke und Batterien parallel zueinander angeordnet sind.

Geht man davon aus, daß die erste Batterie entladen ist und daß die übrigen Batterien aufgeladen sind, ladet der erfindungsgemäße ( 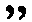 intelligente 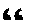 ) Wechselstrom-Ladungsgenerator die entladene Batterie voll auf, während aufgeladene Batterien nicht aufgeladen werden.

Beispielsweise läßt sich ein Regler für 24Volt bis 28 Volt verwenden, der zur Regelung der Speiseeinrichtung des Rotors (24/28 Volt) dient, wobei die Spannung von der zweiten Brücke mit 3 Dioden abgreifbar ist; auch läßt sich die Spannung über den Schlüsselkontakt wie bei jedem beliebigen herkömmlichen Wechselstromgenerator abgreifen.

Es kann ein auf dem Markt erhältlicher 12/14/12/14V-Wechselstromgenerator verwendet werden. Mit Wicklungsabgriffen können Brücken parallel verbunden werden; damit läßt sich ausgehend von 12/14 Volt der Strom verdoppeln, bei 24/28V wären es etwa 100 oder mehr Ampere bzw. 200 Ampere oder mehr.

Es kann der Fall auftreten, daß alle Batterien entladen sind. Dann lädt der vorliegende Wechselstromgenerator alle Batterien auf, bis sie vollständig geladen sind, d.h. 14-7, 28V oder 14+14V im letztgenannten Fall.

Der Rotor (Läufer) ist herkömmlich, aber es ist die Spannung zu berücksichtigen, die wir verwenden: grundsätzlich ist das üblichste 12/14V oder 24/28V, wobei die letztgenannte Kombination die beste ist, um das vorstehend genannte Problem zu lösen.

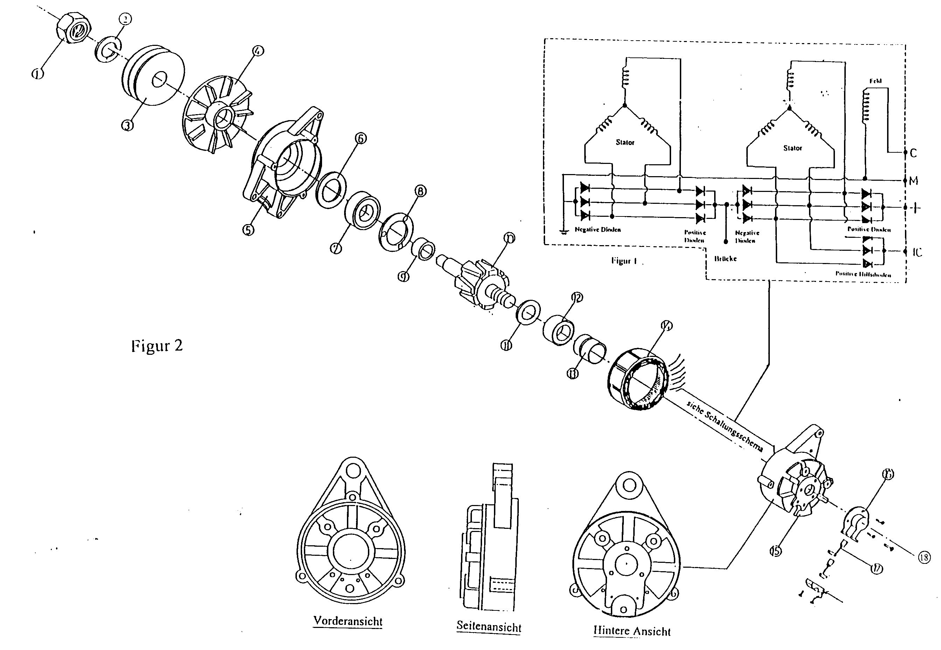

Auch die Regler können an sich bekannte Regler 12/14V, 24/28V oder andere sein; der Stator (Ständer) kann ebenfalls herkömmlich sein bzw. bestimmte Änderungen aufweisen, soweit die konkrete Ausgestaltung der Gesamtanordnung diese erfordert. Die Abdeckung am Kollektor (Figur 2) sollte vergrößert werden, um die 2, 3, 4, oder mehr Gleichrichter aufzunehmen, wobei z.B. eine Hälfte der Gleichrichter an der Antriebsrollen-Seite angeordnet werden kann und die andere Hälfte an der Abdeckung auf der Seiten des Kollektors.

Die Wicklung kann aus Aluminium, Kupfer, Silber, Supraleitermaterial, usw. bestehen. Die Regler entsprechen der konkreten Ausgestaltung der Gesamtanordnung und dem Stromzahl-Verbrauch des Rotors.

Man kann einen Alternator für 2 oder mehr Batterien mit den folgenden Polen aufbauen:

| | | |
|---|---|---|
| Rotor mit 2 Polen | Dreiphasenstator mit 6 Nuten | Einphasenstator mit 2 Polen |
| Rotor mit 4 Polen | Dreiphasenstator mit 12 Nuten | Einphasenstator mit 4 Polen |
| Rotor mit 6 Polen | Dreiphasenstator mit 18 Nuten | Einphasenstator mit 6 Polen |
| Rotor mit 8 Polen | Dreiphasenstator mit 24 Nuten | Einphasenstator mit 8 Polen |
| Rotor mit 10 Polen | Dreiphasenstator mit 30 Nuten | Einphasenstator mit 10 Polen |
| Rotor mit 12 Polen | Dreiphasenstator mit 36 Nuten | Einphasenstator mit 12 Polen |
| Rotor mit 14 Polen | Dreiphasenstator mit 42 Nuten | Einphasenstator mit 14 Polen |
| Rotor mit 16 Polen | Dreiphasenstator mit 48 Nuten | Einphasenstator mit 16 Polen |

und in dieser Weise weiter.

Der Rotor kann auch mit +8 gespeist werden, ohne die 3 in Figur 1 dargestellten Hilfsdioden.

Als Rotor kann ein auf dem Markt erhältlicher Rotor verwendet werden, z.B. ein Rotor für die Spannung 6/7, 12/14, 24/28V.

Der Stator (Ständer) ist ebenso vom konventionellen Typ, aber er kann für Umdrehungstypen, Strom, Klemmen, Nuten entsprechend der Ausgestaltung fortentwickelt werden, wobei die Abdeckung an der Seite des Kollektors etwas größer sein muß, um die 2, 3, 4, etc. Brückendioden aufzunehmen. Auch läßt sich die Abdeckung an der Seite der Pole vergrößern, um die Hälfte der Brückengleichrichter aufzunehmen (Figur 1).

Der erfindungsgemäße Wechselstrom-Ladungsgenerator weist vorzugsweise zwei oder mehr Wicklungen in Stern-, Dreieck- oder Einphasen- oder Dreiphasenanordnung auf, wobei die Wicklungen parallel und in derselben Nut angeordnet sind. Jede Wicklung hat die gleiche Anzahl von Windungen, um dieselbe Spannung zu erhalten.

Der erfindungsgemäße Wechselstrom-Ladungsgenerator kann für eine geringe oder eine hohe Stromstärke ausgelegt sein, wobei jeweils ein Brückengleichrichter für jeweils eine parallele Wicklung der z. B. 2, 3, 4 oder mehr Wicklungen vorgesehen ist. Die Wicklungen sind zueinander in Serie verbunden, wobei die Batterien in Serie zueinander und parallel zu den 2, 3, 4 oder mehr Brücken verbunden sind. Dabei kann beispielsweise der negative Pol mit dem negativen Pol der Batterie verbunden sein, wobei die positive Brücke mit der negativen Brücke zu der Brücke zwischen der ersten und der zweiten Batterie verläuft.

Z.B ist eine erste Wicklung mit einer einzigen Batterie verbunden, wobei für die zweite Wicklung, die parallel angeordnet ist, dasselbe gilt, sowie auch für eine dritte, eine vierte und für jede folgende.

Messungen bzw. Abgriffe können in Serie erfolgen, wobei eine Messung für jede Batterie mit Skala 12/14+12/14+6/7+24/28 mit Voltmeter vorgesehen ist. In der Messung mit Amperemeter oder des Typs Milliamperemeter mit Shunt, für Fernschaltungsbrett im Fall eines 12/14+12/14-Ladungsgenerators, ist ein Meßgerät mit dem Negativen O Volt und das andere in 24/28 positiv verbunden, wobei in der mittleren Brücke kein Amperemeter angeordnet wird. Ein Amperemeter oder Shunt kann zwischen Brückendioden an den negativen Pol der Batterie 0 V und an PM Brücke an Brücke zwischen zwei Batterien +/-angeordnet werden, und wobei an 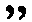 + 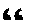 der Schaltung ein Amperemeter oder Shunt an den +Pol der zweiten Batterie angeordnet wird.

In Figur 2 ist der konstruktive Aufbau einer Ausführungsform des erfindungsgemäßen Ladungsgenerators, eine Vorderansicht, eine Seitenansicht sowie eine hintere Ansicht dargestellt.

Dabei bezeichnen 1 eine Mutter, 2 einen Growerring (federnde Unterlegscheibe) 3 eine Doppelrolle, 4 eine Turbine, 5 eine hintere Abdeckung, 6 eine Zwischenlagescheibe, 7 ein Lager, 8 eine Zwischenlagescheibe, 9 eine Buchse, 10 einen Rotor, 11 eine Zwischenlagescheibe, 12 ein Lager, 13 eine Lagerschale, 14 einen Kollektor, Kommutator, 15 eine vordere Abdeckung, 16 eine Abdeckung, 17 Kohle, 18 eine Abdeckung und I die Schaltung nach Figur 1.

### Bezugszeichenliste

### Figur 1

Schaltungsschema
Stator
Negative Dioden
Positive Dioden
Positive Hilfsdioden
Feld

### Figur 2

Vorderansicht
Seitenansicht
Hintere Ansicht
Siehe Schaltungsschema

- 1: Mutter
- 2: Growerring, federnde Unterlegscheibe
- 3: Doppelrolle
- 4: Turbine
- 5: Hintere Abdeckung
- 6: Zwischenlagenscheibe
- 7: Lager
- 8: Zwischenlagescheibe
- 9: Buchse
- 10: Rotor
- 11: Zwischenlagescheibe
- 12: Lager
- 13: Lagerschale
- 14: Kollektor, Kommutator
- 15: Vordere Abdeckung
- 16: Abdeckung
- 17: Kohle
- 18: Abdeckung

## Patentansprüche

1. Wechselstrom-Ladungsgenerator mit Ständer, Läufer und mindestens einer Wicklungsanordnung, insbesondere in Dreiphasen-, Einphasen-, Dreieck- oder Sternstruktur,
dadurch gekennzeichnet,
daß der Wicklungsanordnung eine wicklungsanordnungsindividuelle Gleichrichteranordnung zugeordnet ist.

2. Wechselstrom-Ladungsgenerator nach Anspruch 1, dadurch gekennzeichnet, daß die mindestens eine Wicklungsanordnung in einer Nut des Ständers angeordnet ist.

3. Wechselstrom-Ladungsgenerator nach einem der vorstehenden Ansprüche, dadurch gekennzeichnet, daß mehrere in einer Nut des Ständers angeordnete Wicklungsanordnungen dieselbe Windungszahl aufweisen.

4. Wechselstrom-Ladungsgenerator nach einem der vorstehenden Ansprüche, dadurch gekennzeichnet, daß an jede Wicklungsanordnung eine aufzuladende Batterie anschließbar ist.

5. Wechselstrom-Ladungsgenerator nach einem der vorstehenden Ansprüche, dadurch gekennzeichnet, daß ein Regler für die Regelung der Speisespannung des Läufers vorgesehen ist.

6. Wechselstrom-Ladungsgenerator nach einem der vorstehenden Ansprüche, dadurch gekennzeichnet, daß dieser in der Weise ausgestaltet ist, daß bei einem Anschluß erster Batterien, die mindestens teilweise entladen sind, und zweiter Batterien, die voll aufgeladen sind, nur den ersten Batterien ein Aufladestrom zugeführt wird.

7. Wechselstrom-Ladungsgenerator nach einem der vorstehenden Ansprüche, dadurch gekennzeichnet, daß die mindestens eine Wicklungsanordnung Wicklungselemente aufweist, die aus Aluminium, Kupfer, Silber oder supraleitendem Material bestehen.

8. Wechselstrom-Ladungsgenerator nach einem der vorstehenden Ansprüche, dadurch gekennzeichnet, daß eine Mehrzahl von Gleichrichteranordnungen vorgesehen ist, und daß die Gleichrichteranordnungen miteinander verbunden sind und daß an Verbindungspunkten Abgriffe vorgesehen sind.

9. Ständer für einen Wechselstrom-Ladungsgenerator nach einem der vorstehenden Ansprüche.

10. Läufer für einen Wechselstrom-Ladungsgenerator nach einem der Ansprüche 1 bis 8.

11. Wicklungsanordung für einen Wechselstrom-Ladungsgenerator nach einem der Ansprüche 1 bis 8.

12. Gleichrichteranordnung für einen Wechselstrom-Ladungsgenerator nach einem der Ansprüche 1 bis 8.
